# FASCICULE DE BREVET EUROPEEN

(11) **EP 0 511 061 B1**
(45) Date de publication et mention de la délivrance du brevet: **28.08.1996**
(21) Numéro de dépôt: 92401089.5
(22) Date de dépôt: 17.04.1992
(51) Int. Cl.: B29C 33/00, B29C 65/00

(54) **PIECE PLASTIQUE AVEC DES INSERTS DE FIXATION**
KUNSTSTOFF GEGENSTAND MIT BEFESTIGUNGSEINLAGEN
PLASTIC OBJJECT WITH ALIGNMENT INSERTS

(30) Priorité: 25.04.1991 FR 9105119
(43) Date de publication de la demande: 28.10.1992
(73) Titulaire: SAGEM ALLUMAGE Société Anonyme, F-75783 Paris Cédex 16 (FR)
(72) Inventeur: Bedoussac, Raymond, F-63570 Brassac Les Mines (FR)
(74) Mandataire: Bloch, Gérard

(56) Documents cités:
- FR-A- 962 395
- FR-A- 1 023 043
- FR-A- 2 184 110

## Description

La présente invention concerne une pièce en matière plastique selon le préambule de la revendication 1.

On connaît, par le document FR-A-1 023 043, de fixer une pièce en disposant dans le trou de fixation un insert en tôle roulée.

On connaît par ailleurs des inserts métalliques de fixation, notamment dans les bobines d'allumage des moteurs de véhicules automobiles. Ces bobines d'allumage comprennent un boitier en matière plastique dans lequel sont noyés, lors du moulage, des inserts métalliques tubulaires qui, au montage de la bobine, sont traversés par des boulons. Ces inserts tubulaires forment à une de leurs deux extrémités axiales une surface d'appui pour la tête du boulon et à leur autre extrémité axiale une surface d'appui pour la bobine sur son support.

Une telle pièce en matière plastique est divulguée dans le préambule de la revendication 1.

Ces inserts de type connu sont réalisés par décolletage, ce qui est relativement onéreux et présente un certain nombre d'autres inconvénients.

Tout d'abord, ces inserts sont utilisés par paire, l'un des inserts d'une paire présentant généralement à l'une de ses extrémités axiales un bourrelet de "détrompage". La fonction de ce bourrelet qui, lors du montage de la bobine, s'engage dans un lamage du support, est d'assurer que la bobine est montée dans le bon sens. L'autre insert de la bobine ne présente pas ce bourrelet et vient donc s'appliquer contre une surface plane. Il en résulte qu'il est nécessaire d'utiliser deux types d'inserts différents.

Par ailleurs, lors du moulage du boitier de la bobine, l'insert présentant le bourrelet, doit être disposé au bon emplacement et dans le bon sens, avec des risques de détérioration du moule en cas d'erreur de pose de ces inserts.

La présente invention vise à pallier ces inconvénients en fournissant un insert peu coûteux et une pièce en matière plastique, telle qu'un boîtier de bobine d'allumage, comportant une paire d'inserts identiques, la fonction de détrompage n'étant pas réalisée par ces inserts.

A cet effet, l'invention a pour objet une pièce en matière plastique comprenant une paire d'inserts métalliques de fixation réalisés en tôle roulée, notamment en tôle perforée, une couche de matière plastique revêt l'intérieur des inserts, et ladite couche fait saillie axialement a l'une des extrémités de l'un des inserts.

Une modification preferée est divulguée dans la revendication 2.

La fabrication de l'insert est par conséquent particulièrement simple.

Par ailleurs, les perforation de la tôle sont, après moulage, remplies de matière plastique, ce qui assure le maintien en place de l'insert sans avoir recours aux gorges annulaires ou au guillochages de l'art antérieur.

La couche de matière plastique qui revêt l'intérieur de l'insert maintien convenablement l'insert en place.

La fonction de détrompage est réalisée en prolongeant cette couche de matière plastique interne, de manière qu'elle fasse saillie axialement à une des extrémités de l'un des inserts formant ainsi un bourrelet similaire à celui des inserts de l'art antérieur.

On décrira maintenant à titre d'exemple non limitatif, un mode de réalisation particulier de l'invention en référence aux dessins annexés dans lesquels :
- la figure 1 est une vue de dessus d'un insert;
- la figure 2 en est une vue développée ;
- la figure 3 en est une vue en perspective et ;
- la figure 4 est une vue de face schématique partiellement en coupe d'une bobine d'allumage et de son support.

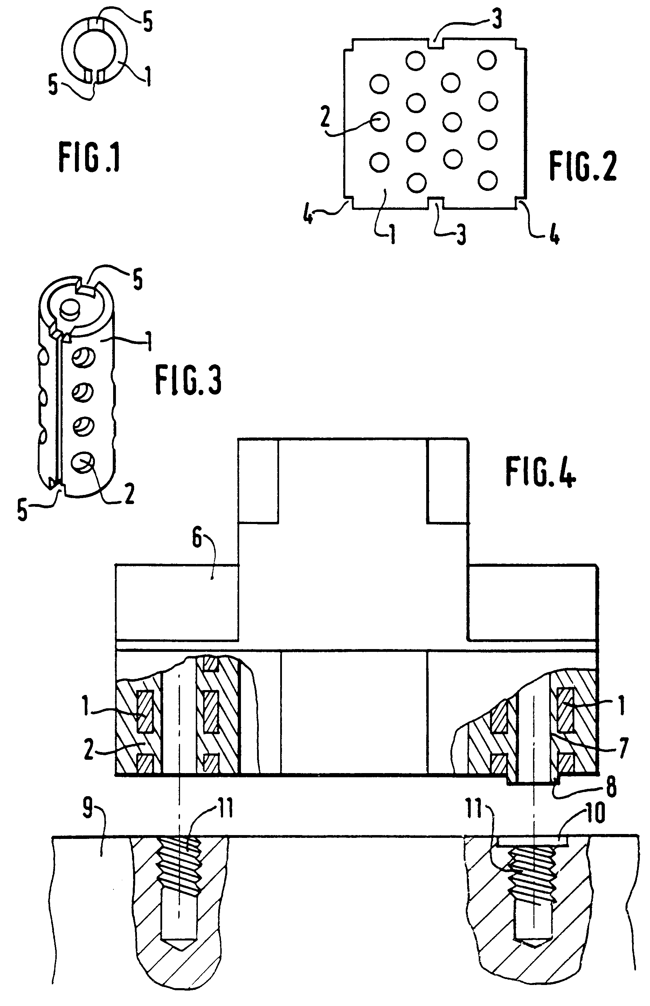

L'insert des figures 1 à 3 est réalisé par découpage d'une tôle métallique 1, d'épaisseur par exemple comprise entre 1 et 2 millimètres, puis par roulage du flan ainsi découpé.

Comme montré à la figure 2, ce flan 1 comporte des perforations 2 et deux de ses bords forment des embrèvements 3 tandis que ces coins forment des découpes 4. Après roulage du flan 1, les embrèvements 3 et les découpes 4 forment des encoches 5 diamétralement opposées dans les bords d'extrémités de l'insert tubulaire fini.

Si l'on se réfère maintenant à la figure 4, on voit une bobine d'allumage dont le boitier 6 en matière plastique comporte deux inserts 1. Ces inserts sont noyés dans la matière plastique qui penetre dans les perforations 2 et forme une couche 7 à l'interieur des inserts.

Du côté d'un des inserts, cette couche 7 est prolongée axialement vers l'extérieur du boitier pour former un bourrelet annulaire 8.

Lors du montage de la bobine sur son support 9, le bourrelet 8 s'engage dans un lamage 10 formé autour de l'orifice d'un des deux trous taraudés 11 servant à recevoir les boulons de fixation qui traversent les inserts 1 pour fixer la bobine sur le support 9.

La bobine est obligatoirement montée dans le bon sens puisqu'elle ne comporte qu'un seul bourrelet 8, et que le support 9 ne comporte qu'un seul lamage 10.

L'invention permet de reporter sur la pièce dans laquelle l'insert est noyé la fonction de détrompage.

## Revendications

1. Pièce en matière plastique comprenant une paire d'inserts métalliques (1) de fixation réalisés en tôle roulée, caractérisée par le fait qu'une couche de matière plastique (7) revêt l'intérieur des inserts, et que ladite couche fait saillie axialement (8) à l'une des extrémités de l'un des inserts.

2. Pièce selon la revendication 1, dans laquelle la tôle est perforée.

## Claims

1. A part made of plastics material comprising a pair of metal fixing inserts (1) formed out of rolled sheet metal, characterized by the fact that a layer of plastics material (7) forms a coating for the inside of the inserts, and that the said layer protrudes axially (8) at one of the ends of one of the inserts.

2. A part as claimed in Claim 1, wherein the sheet metal is perforated.

## Patentansprüche

1. Werkstück aus Kunststoff, enthaltend ein Paar Befestigungs-Metalleinsätzkörper (1) aus rundgebogenem Blech, dadurch gekennzeichnet, daß eine Kunststoffschicht (7) die Innenseite der Einsätzkörper bedeckt, und daß diese Schicht an dem einen Ende eines der Einsatzkörper (8) axial vorspringt.

2. Werkstück nach Anspruch 1, bei dem das Blech perforiert ist.
